# EUROPEAN PATENT APPLICATION

(11) **EP 0 682 317 A1**
(43) Date of publication of application: **15.11.1995**
(21) Application number: 95302827.1
(22) Date of filing: 26.04.1995
(51) Int. Cl.: G06F 15/80

(54) **Vector processor for use in pattern recognition**

(30) Priority: 09.05.1994 US 239631
(71) Applicant: AT&T Corp., New York, NY 10013-2412 (US)
(72) Inventor: McLellan, Hubert Rae, Summit, NJ 07901 (US); Sackinger, Eduard, Tinton Falls, New Jersey 07724 (US)
(74) Representative: Watts, Christopher Malcolm Kelway, Dr.

(57) **Abstract**

A digital pattern recognition vector processor (10) for use in the parallel processing of at least two input data vectors includes a shifter and buffer (12') for aligning the individual plural components of a first input data vector with the individual plural components of a second input data vector. The aligned data vectors are input to an arithmetic processing unit (20) formed of a plurality of processing elements configured as a single instruction - multiple data processor array for concurrently performing a selected one of a plurality of operations on the aligned pairs of components of the input vectors. The data representing the results of the processor-effected operation is then reconfigured by a data formatting unit (30) to conform the output data vector to the plural component configuration of the input data vectors.

## Description

### Technical Field

This invention pertains to computer architectures used for the parallel processing of data. More particularly, the present invention is directed to a computer architecture arrangement for performing fast vector operations and suitable for use in pattern recognition and signal processing applications.

### Background of the Invention

Applications such as personal communicators and personal digital assistants (PDAs) make use of pen-based handwriting as well as speech input. These tasks require large amounts of computational power to achieve good performance. In addition, personal communicators and PDAs should as a practical matter be reasonably affordable and operatively consume low power, since they typically rely on battery cells. Although low-end devices can be implemented using current technology, high-end systems of the type needed to process handwriting and speech input require more advanced computer performance. This is so because the algorithms generally employed for multi-media input functions, such as pen-based handwriting and speech input, require a large amount of uniform vector-type operations. In other words, the input data is represented in space (images) and in time (speech) and is, after sampling, naturally converted into vectors. Thus, hardware employed for these applications must be capable of processing such data vectors at high speeds and must often run on battery powered, low-cost systems.

If computational speed were the only requirement for advanced applications using pen-based handwriting and/or speech input, parallel computer systems such as those disclosed in Muller, et al., Achieving Super Computer Performance For Neural Net Simulation With an Array of Digital Signal Processors, 12 IEEE MICRO, pp. 55-65 (October 19, 1992), and Morgan, et al., A Multi-Processing Peripheral for Connectionist Applications, Journal of Parallel and Distributed Computing, pp. 248-59 (1992), could provide a viable solution. However, these systems are typically associated with high cost, large size and high power consumption, thereby precluding their use in applications such as personal communicators and PDAs. It is, therefore, desirable to have a parallel computer system suitable for use in personal communicators and PDAs for processing pen-based handwriting and/or speech input.

### Summary of the Invention

The present invention is directed to a digital pattern recognition vector processor for use in the processing of at least two data signals, having a predetermined configuration, each with a plurality of components of data and a known or determinable number of data bits per component. The vector processor comprises means for aligning the plurality of data components so that the data components in one signal correspond with the data components in the other signal. The aligned data signals are directed to a multiplicity of processing elements wherein the number of processing elements in such multiplicity is at least equal to the plurality of data components in each data signal. The multiple processing elements are configured or arranged to form a single instruction - multiple data processor (SIMD) array. Each processing element in such multiplicity of elements is capable of concurrently performing, along with the other processing elements, a selected one of a plurality of operations on the respective ones of the data components in each of the two data signals, so that the same operation is concurrently performed by each of the processing elements on each of the corresponding data components in each data signal, for forming an output data signal. The output data signal likewise has a plurality of components of output data. Means are also provided for formatting the output data signal to conform to the predetermined configuration of the two data input signals. In the preferred embodiment of the inventive apparatus, the means for formatting the output data signal further includes means for adding the vector components of the output data signal to form a scalar as well as means for scaling and saturating the output data signal.

In another embodiment, the predetermined configuration of the two data signals is selected from a multiplicity of predetermined configurations and the processor further comprises means for identifying the predetermined configuration selected. Means responsive to the identifying means are provided for reconfiguring at least one of the aligning means, the SIMD array, and the reformatting means in accordance with the selected predetermined configuration, thereby enabling processing of the input signals.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### Brief Description of the Drawing

In the drawings, wherein like reference numerals denote similar elements throughout the several views:
FIG. 1 is a block diagram of a digital pattern recognition vector processor constructed in accordance with the teachings of the present invention;
FIG. 2 is a more detailed block diagram of the structure of FIG. 1, showing the configuration of the interconnected plural processing elements; and
FIG 3. is the block diagram of another embodiment of the present invention.

### Detailed Description

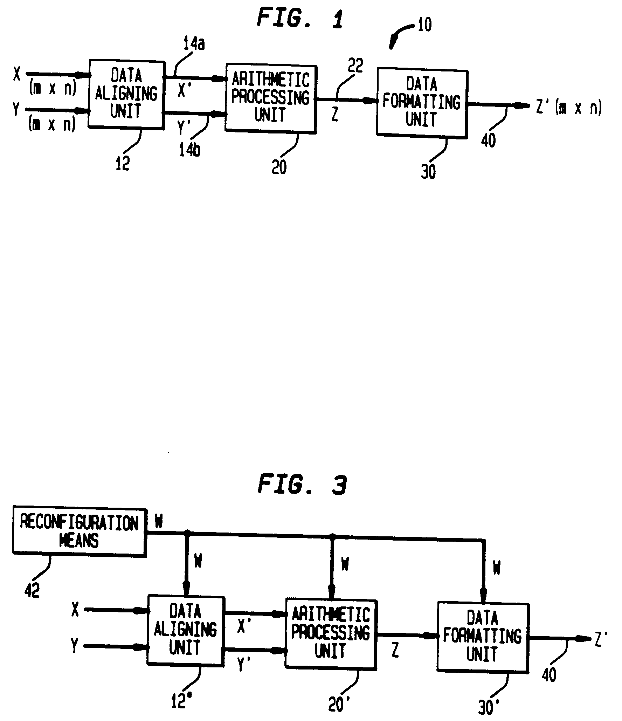

Referring now to the drawings, and initially to FIG. 1, a block diagram of a digital pattern recognition vector processor 10 constructed in accordance with the present invention is there shown. As depicted, the unit 10 comprises means for inputting data signals X and Y which are configured as data vectors, each having a plurality m of components of data, and each such component of both signals having a designated number of bits n. The data vectors X and Y are input to an arithmetic processing unit 20 via input means, such as the respective data busses 14a, 14b. As more fully described below, the arithmetic processing unit 20 is formed of a plurality of processing elements and the number of processing elements is preferably equal to the number of components in each data vector X and Y (i.e. m). Also for reasons more fully explained below, before the input vectors X and Y are input to the arithmetic processing unit 20, they are operated on by a data aligning unit 12 which aligns the vector Y components in component-to-component relation with the corresponding components of input vector X, the resulting aligned input vectors being herein designated X', Y'.

The data generated by arithmetic processing unit 20 is output on an intermediate data bus 22 as an output data signal having the form of an intermediate output vector Z that includes a plurality of components of data. Intermediate output vector Z is then operated on by formatting means 30 which reformats the output vector Z to conform to the configuration of the input vectors X and Y -- i.e. so that the output vector components have the same number of bits (n) as the data components of the vectors X and Y. The reformatted output vector Z' is then output from the vector processor 10 on an output data bus 40.

The plurality of processing elements forming the processing unit 20 are configured and arranged so as to provide a Single Instruction-Multiple Data (SIMD) processor array, with each processing element in the array capable of performing a plurality of mathematical functions or operations such as addition, subtraction, multiplication, etc. on the individual components of the aligned input data vectors X', Y'. The SIMD array is more particularly configured so that each of its processing elements concurrently performs the same mathematical operation or function on respective ones of the components of the aligned input data vectors X', Y' and outputs the results as intermediate output vector Z. Vector Z, as more fully described below, will have an equal number m of components as do the vectors X, Y but potentially more than the number n of data bits per component, as a function of the mathematical operation carried out by the SIMD array.

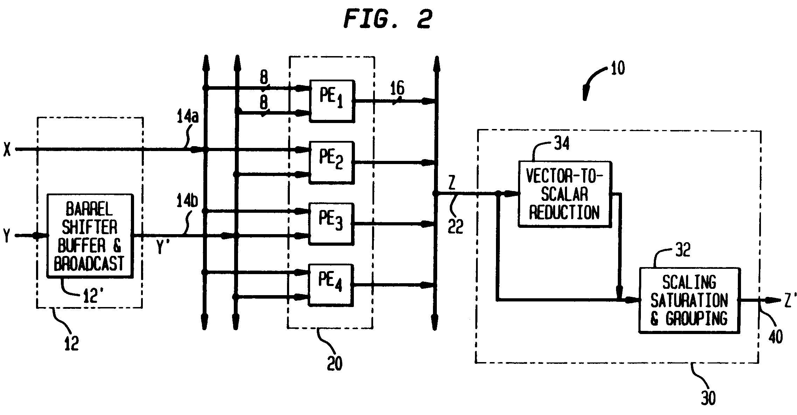

FIG. 2 is a block diagram of the inventive digital pattern recognition vector processor 10 of Fig. 1 more particularly showing the SIMD array configuration. The processing unit 20 is arranged for processing the aligned input vectors X', Y', each being configured as a 4x8 vector. As such, the number of processing elements needed for such a processing operation is four, these elements being designated in the Figure as PE₁, PE₂, PE₃ and PE₄. As should be apparent, however, where input vectors having more than four components are used, the number of processing elements would be correspondingly increased. It should also be noted that although only two input vectors are shown, i.e. the vectors X, Y, those of ordinary skill in the art will appreciate that additional input vectors may be inputted, provided that the input vectors are properly aligned before being directed to the SIMD array.

With continued reference to FIG. 2, the input data bus 14a supplies the individual components of input vector X to the respective processing elements PE₁, PE₂, PE₃ and PE₄. The input bus 14b similarly supplies the individual components of input vector Y' to the respective processing elements. It should be pointed out that inasmuch as data in the form of vectors is used for input signals, it cannot be expected that the various components of input vector X will be properly aligned with the respective components of input vector Y. Thus, in the preferred embodiment of the vector processor 10 the data aligning unit 12 -- which is delineated 12' in FIG. 2 and receives only input vector Y -- comprises a barrel shifter for suitably shifting the components of input vector Y into component-to-component alignment or correspondence with the components of input vector X, thus forming the vector Y'. Of course, that the data aligning unit 12 in the described embodiment operates on input vector Y, as opposed to (or in addition to) vector X, is simply a matter of design choice. Thus, data aligning unit 12 may alternatively, or additionally, be designed for operating on the components of input vector X. In that case, input vectors X' and Y would be input to the plurality of processing elements. In the preferred embodiment of the vector processor 10, the barrel shifter 12' further includes a buffer for caching previously-read input vectors and thereby controlling the data traffic input to the plurality of processing elements 20. The barrel shifter 12' may still further be configured to include a broadcast function which replicates a single component of the input vector Y into all components for facilitating vector-scalar operations.

Each processing element PE₁, PE₂, PE₃, PE₄ of the disclosed arithmetic processing element 20 is capable of performing an 8x8 bit mathematical operation. The processing elements are arranged and configured so that element PE₁ operates on the first components of the input vectors X, Y', element PE₂ operates on the second components of the vectors X, Y', etc. Thus, the output of each processing element is -- for multiplication by way of example -- a 16-bit result of the mathematical operation, thereby defining the intermediate output vector Z in the format m×2n, i.e. 4×16 bits for two 4×8 bit input vectors.

Since intermediate output vector Z is formed of four 16-bit components -- which is a different format than the four 8-bit components of each of the input vectors X, Y -- the vector Z must be modified to conform to the 8-bit format of the input vectors. Toward that end, the intermediate output vector Z is input to a data formatting unit 30 formed of a vector-to-scalar reduction means 34 and a scaling, saturation and grouping means 32. The data formatting unit 30 thus scales the components of the intermediate output vector Z and if necessary, saturates the individual components to a predetermined maximum or minimum value. It is in this regard preferred that the scale factors be programmable. Moreover, if an application requires a vector-to-scalar reduction operation, such as summing the intermediate output vector components, the vector-to-scalar reduction means 34 may additionally sum the plural components of the intermediate output vector Z to thereby form or define a scalar-form output. In addition, vector-to-scalar reduction means 34 may contain accumulators to facilitate the reduction of vectors having a number of components greater than m. Further, unit 32 may provide means for grouping several of the scalar output values into a vector format for facilitating vector-matrix multiplication.

Referring now to FIG. 3, a modification of the embodiments of FIGs. 1 and 2 is depicted. As shown, a reconfiguration means 40 generates a reconfiguration signal W that is employed to reconfigure the units 12'', 20' and 30', each being responsive to the signal W for reconfiguring these units to process input vectors X and Y having a particular one of a plurality of predetermined configurations. The reconfiguration means 42 is responsive to an identification means (not shown) which identifies the configuration of the input vectors X and Y. Signal W may, by way of example, take the form of one of a plurality of values, e.g. I to 4. Thus, if X and Y are each represented by a total of 32 bits, typical configurations would be 4 components with 8 bits (m=4, n=8) for W=1; eight 4-bit components (m=8, n=4) for W=2; two 16-bit components (m=2, n=16) for W=3; and one 32-bit component(m=1, n=32) for W=4. It should be noted that the m=1, n=32 configuration, as when W=4, is of particular interest in that it readily allows for scalar operations. The reconfiguring means 40 permits the user to choose the optimal trade-off between speed (through increased number of components m) and precision (increased number of bits n per component m) for a particular application by selecting the appropriate value of the reconfiguration signal W.

By way of example for 32-bit input vectors X, Y and with reference to FIG. 3, if the desired mathematical function is addition or subtraction, by modifying the carry propagation logic in a manner known to those of ordinary skill in the art four 8-bit adders that are part of the arithmetic processing unit 20 may be easily reconfigured into eight 4-bit adders or two 16-bit adders. The corresponding values of the reconfiguration signal W in this case might be 2 and 3, respectively. Similarly, if the desired arithmetic function is multiplication, by setting the appropriate partial products to zero and modifying the sign-bit logic four 8-bit array multipliers may be easily divided into eight 4-bit multipliers.

The vector processor of the present invention advantageously provides a number of significant benefits. Primarily -- and with particular reference to the implementation of FIG. 2 utilizing (by way of example) 4×8 bit input vectors X, Y - - four separate 8-bit processing elements, as opposed to a single 32-bit processing element as in conventional arrangements, process the input data vectors resulting in a four times higher throughput. The 8-bit processing elements are used because large parts of pattern recognition algorithms can be carried out with 8-bit precision. Since a parallel 8-bit arithmetic processing element is significantly smaller in size and complexity than a parallel 32-bit arithmetic processing element and, in turn, requires significantly less energy per operation than a 32-bit arithmetic processing element, the invention is particularly well suited for use in personal communicators and other apparatus in which minimal power consumption is necessary or desired. In addition, the cost-performance ratio of four 8-bit processing elements is significantly better than that of a single 32-bit processing element.

As is well known to those of ordinary skill in the art, to complete the data path for the data generated by the present invention various on-chip registers and an external memory interface are required. In addition, since most applications consist of both scalar and vector operations, a scalar processor may also be needed. These additional elements are not a part of the present invention. It should be further pointed out that the amount of memory required to store a plurality of 8-bit values is four times less than that required to store the same number of 32-bit values; thus, in applications such as speech recognition which typically use large amounts of memory, the reduction in memory size and cost achieved in accordance with the present invention is particularly noteworthy. These advantages more than compensate for the requirement that the 16-bit (i.e. 2n) data components of the intermediate data vector Z must be scaled to n bits in a manner preventing the loss of information.

While there has shown and described and pointed out fundamental novel features of the invention as applied to currently preferred embodiments thereof, it will be understood that various omissions and substitutions and changes in the form and details of the devices illustrated, and in their operation, may be made by those skilled in the art without departing from the invention. For example, and as stated above, for additional vector components, additional arithmetic processing elements can be used. In addition, although the invention is described as having two input vectors, namely X and Y, additional input vectors may, likewise, be concurrently processed by the present invention. Moreover, other means for formatting or reconfiguring the intermediate output data vector Z may be employed within the intended scope and contemplation of the present invention. It is the intention, therefore, to be limited only as indicated by the scope of the claims appended hereto.

## Claims

1. A digital pattern recognition vector processor for use in the parallel processing of a first and a second data signal each having a predetermined configuration defined by an equal plurality of data components, said vector processor comprising:
means for aligning the plural data components of the first data signal with corresponding ones of the plural data components of the second data signal;
a multiplicity of processing elements for receiving the aligned first and second data signals, said multiplicity being at least equal to said data components plurality of each data signal, and said multiple elements being configured to define a single instruction - multiple data processor array wherein all of said multiple processing elements concurrently operate to concurrently perform a single selected one of a plurality of operations on the first and second data signals such that each of said processing elements performs said selected operation on a respective corresponding data component of each of the aligned first and second data signals to thereby form an output data signal having a plurality of components of output data; and
means for reformatting said output data signal from said plurality of processing elements so as to conform each of the plural components of the output data signal to said predetermined configuration of the data components of the first and second data signals.

2. The vector processor of claim 1, wherein the first and second data signals and the output data signal comprise data vectors.

3. The vector processor of claim 2, wherein said means for reformatting the output data vector further comprises means for scaling and saturating the components of the output data vector.

4. The vector processor of claim 3, wherein said means for reformatting the output data vector further comprises means for reducing the output data vector to a scalar-form output.

5. The vector processor of claim 4, wherein said means for reformatting the output data vector further comprises means for grouping several scalar-form output values to form a vector output.

6. The vector processor of claim 1, wherein said aligning means comprises a barrel shifter.

7. The vector processor of claim 6, wherein said aligning means further comprises a buffer for controlling the flow of data signals to said multiple processing elements.

8. The vector processor of claim 2, wherein said aligning means further comprises means for replicating one component of one of said input vectors to all components for facilitating vector-scalar operations.

9. The vector processor of claim 3, wherein each of the data components of the first and second data vectors comprises a predetermined number of data bits, wherein each of the data components of the output data vector comprises a number of data bits different than said predetermined number of data bits, and wherein said means for reformatting said output data vector further comprises means for adjusting the number of data bits in the components of the output vector to equal said predetermined number of data bits in the components of the first and second data vectors.

10. The vector processor of claim 1, wherein said aligning means receives and operates on the second data signal to align the plural data components of the first and second data signals.

11. The vector processor of claim 1, wherein said predetermined configuration of the first and second data signals is selected from a multiplicity of predetermined configurations, said processor further comprising means for identifying the predetermined configuration selected.

12. The vector processor of claim 11, further comprising means responsive to said identifying means for reconfiguring at least one of said aligning means, said multiplicity of processing elements and said reformatting means in accordance with the selected predetermined configuration, thereby enabling processing of the first and second data signals.
